# EUROPÄISCHE PATENTSCHRIFT

(11) **EP 1 507 106 B1**
(45) Veröffentlichungstag und Bekanntmachung des Hinweises auf die Patenterteilung: **18.07.2007**
(21) Anmeldenummer: 03405596.2
(22) Anmeldetag: 15.08.2003
(51) Int. Cl.: F16J 15/34, F01D 11/00

(54) **Rotationsdichtung**
Rotary seal
Garniture d'étanchéité rotative

(43) Veröffentlichungstag der Anmeldung: 16.02.2005
(73) Patentinhaber: ABB Turbo Systems AG, 5400 Baden (CH)
(72) Erfinder: Bochud, Dominique, 5417 Untersiggenthal (CH)
(74) Vertreter: ABB Patent Attorneys

(56) Entgegenhaltungen:
- EP-A- 1 130 220
- US-A- 3 099 453
- US-A- 3 961 867

## Beschreibung

### Technisches Gebiet

Die Erfindung bezieht sich auf das Gebiet der Abgasturbolader.

Sie betrifft eine Rotationsdichtung gemäss dem Oberbegriff des Patentanspruchs 1 sowie einen Kolbenring gemäss dem Oberbegriff des Patentanspruchs 5. Sie betrifft ferner einen Turbolader mit einer entsprechenden Rotationsdichtung.

### Stand der Technik

Handelsübliche Kolbenringe zum Abdichten von rotierenden Teilen in Turboladern sind mit zunehmender Leistungssteigerung und den damit verbundenen thermischen Belastungen nicht mehr in der Lage, ihre Funktion als Wellenabdichtung vollständig wahrzunehmen.

Die Kolbenringe sind zwischen einem feststehenden und mindestens einem rotierenden Teil angeordnet und dienen als Gas- und/ oder Öldichtung. In der Regel wird der Kolbenring bei der Montage des Turboladers mit radial nach aussen gerichteter Vorspannung beaufschlagt und mit dem feststehenden Teil kraftschlüssig und dichtend verbunden. Im Betrieb wird der Kolbenring durch den hohen anliegenden Luft- oder Abgasdruck in Richtung des rotierenden Teils gepresst. Dadurch verringert sich der Dichtspalt zwischen Kolbenring und rotierendem Teil was zur gewünschten Dichtwirkung führt. Um eine optimale Dichtwirkung mit minimalem Dichtspalt zu erreichen, wird ein neu eingebauter Kolbenring durch Reiben an dem rotierenden Teils in axialer Richtung eingeschliffen. Die negativen Auswirkungen fertigungsbedingter Massabweichungen (Toleranzen) auf den Dichtspalt im Betrieb werden durch das Einschleifen eliminiert. Die Reibung zwischen Kolbenring und dem rotierenden Teil führt zu einer starken Erhitzung des Kolbenrings.

Turbinenseitig kommt dazu, dass der Kolbenring auch betriebsbedingt sehr hohen Temperaturen ausgesetzt sein kann. Zwar sind die Temperaturen im stationären Betrieb relativ konstant auf einem verträglichen Niveau. Kommt es jedoch beim Abschalten des Turboladers zu einer starken Nacherwärmung, kann die Kolbenringtemperatur den für den Verlust der Vorspannung kritischen Bereich erreichen. Insbesondere bei Notstops, wenn Kühlungsmassnahmen ausgeschaltet werden müssen, ergeben sich oft sehr hohe Temperaturspitzen.

Wird der Kolbenring zu heiss, geht die radiale Vorspannkraft verloren und der Kolbenring dichtet gegenüber dem feststehenden Teil nicht mehr genügend ab. Dies kann je nach Material bereits ab einer Temperatur von 350°C geschehen. Zudem neigt der entspannte Kolbenring dazu, mit den rotierenden Teilen mitzudrehen wodurch er sich abnormal abnützen und schliesslich sogar brechen kann. Beschädigte Kolbenringe können zu erheblichen Betriebsstörungen des Turboladers führen.

Bei der Materialwahl für herkömmliche Kolbenringe wird darauf geachtet, dass einerseits ein möglichst weiches Material verwendet wird, um den Einschleifprozess zu unterstützen und eine möglichst optimale Dichtung zu erzielen. Andererseits sollte ein möglichst warmfestes, hitzebeständiges Material verwendet werden, um die Vorspannung nicht schon bei geringen thermischen Belastungen aufs Spiel zu setzen. Weich und warmfest sind jedoch schwierig zu kombinierende, um nicht zu sagen widersprüchliche Materialeigenschaften. Bei der Materialwahl müssen somit Kompromisse eingegangen und in die eine oder andere Richtung entsprechende Zugeständnisse gemacht werden.

US 3 099 453 offenbart eine Rotationsdichtung zum Abdichten eines rotierenden Bauteils gegen ein stehendes Gehäuse mittels einem Kolbenring und einem daran befestigten zweiten Ring, wobei der am Kolbenring befestigte, zweite Ring durch den Reibkontakt zu einem der beiden Bauteile abgeschliffen wird. Der am Kolbenring befestigte Ring ist aus einem weichen Material gefertigt, welches den Abschleifprozess unterstützt. Die Abdichtung wird gewährleistet durch eine Feder, welche den Kolbenring und den daran befestigten zweiten Ring in axialer Richtung gegen das rotierende Bauteil drücken.

EP 1 130 220 A2 offenbart eine Rotationsdichtung zum Abdichten eines rotierenden Bauteils gegen ein stehendes Gehäuse mittels einem Kolbenring, welcher durch Reiben an dem rotierenden Teils in axialer Richtung abgeschliffen wird. Um das zu starke Abschleifen des Kolbenrings zu verhindern, ist am Gehäuse ein Anschlag vorgesehen, welcher die Verschiebbarkeit des Kolbenrings in axialer Richtung begrenzt.

### Kurze Darstellung der Erfindung

Der Erfindung liegt folglich die Aufgabe zugrunde, eine Rotationsdichtung der eingangs genannten Art sowie einen entsprechenden Kolbenring zu schaffen, welche auch bei hoher thermischer Belastung die Wellenabdichtung vollständig gewährleisten.

Erfindungsgemäss wird diese Aufgabe mit den Merkmalen des Patentanspruchs 1 gelöst.

Die erfindungsgemässe Rotationsdichtung umfasst einen Kolbenring mit mindestens zwei Bereichen aus unterschiedlichen Materialien, wobei der erste Bereich, welcher eine mit einem rotierenden Bauteil zusammenwirkende Kontaktoberfläche umfasst, aus einem weichen, leicht abtragenden Material zum optimalen Unterstützen eines gewünschten Einschleifprozesses zwischen dem Kolbenring und dem ersten Bauteil und eine zweiter Bereich aus einem warmfesten Material zur dauerhaften Erhaltung der Radialvorspannung gefertigt ist.

Der in zwei Bereiche aus unterschiedlichen Materialen unterteilte Kolbenring hat den Vorteil, dass er mit dem Bereich aus hochwarmfesten Material die Erhaltung der geforderten Radialvorspannung dauerhaft ermöglicht und gleichzeitig mit dem Bereich aus einem weichen Abstreifmaterial den gewünschten Einschleifprozess zwischen Kolbenring und rotierendem Teil optimal unterstützt. Damit erübrigt sich der obengenannte Kompromiss bei der Wahl der Materialien.

In der erfindungsgemässen Rotationsdichtung ist vorteilhafterweise ein Anschlag vorgesehen, welcher die Verschiebbarkeit des Kolbenrings in axialer Richtung begrenzt. Dies ermöglicht, die Einschleiftiefe des Kolbenrings während dem Einschleifprozess zu kontrollieren. Der Abstreifbereich hat dabei vorteilhafterweise eine Dicke, welche zumindest der maximalen Verschiebbarkeit des Kolbenrings bis an den Anschlag entspricht.

Der erfindungsgemässe Kolbenring, ist vorteilhafterweise derart ausgebildet, dass der erste, weiche Bereich in Form eines Ringes ausgebildet ist, welcher vom zweiten, hochwarmfesten Bereich axial und radial jeweils zumindest einseitig umfasst ist. Dadurch wird verhindert, dass der weiche Bereich im Betrieb vom härteren, warmfesten Bereich radial weggeschoben wird.

Weitere Vorteile ergeben sich aus den abhängigen Ansprüchen.

### Kurze Beschreibung der Zeichnungen

Im folgenden ist anhand der Figuren ein Ausführungsbeispiel der erfindungsgemässen Verbindung schematisch dargestellt und näher erläutert. In allen Figuren sind gleichwirkende Elemente mit gleichen Bezugszeichen versehen. Es zeigen:
- Fig. 1: eine Ansicht auf ein Turbolader mit zwei, zwischen rotierenden Teilen und feststehenden Gehäuseteilen angeordneten Rotationsdichtungen,
- Fig. 2: eine vergrösserte Ansicht auf die erfindungsgemäss ausgeführte, turbinenseitige Rotationsdichtung nach Fig. 1 vor Begin des Einschleifprozesses,
- Fig. 3: die Rotationsdichtung nach Fig. 2 im Betriebszustand nach Abschluss des Einschleifprozesses,
- Fig. 4: eine vergrösserte Ansicht auf die erfindungsgemäss ausgeführte, verdichterseitige Rotationsdichtung nach Fig. 1 im Betriebszustand nach Abschluss des Einschleifprozesses,
- Fig. 5: einen der Kolbenringe der Rotationsdichtungen nach Fig. 1, und
- Fig. 6: ein Ansicht auf einen entlang V-V geführten Schnitt durch den Kolbenring nach Fig. 5
a) vor Begin des Einschleifprozesses und
b) im Betriebszustand nach Abschluss des Einschleifprozesses.

### Weg zur Ausführung der Erfindung

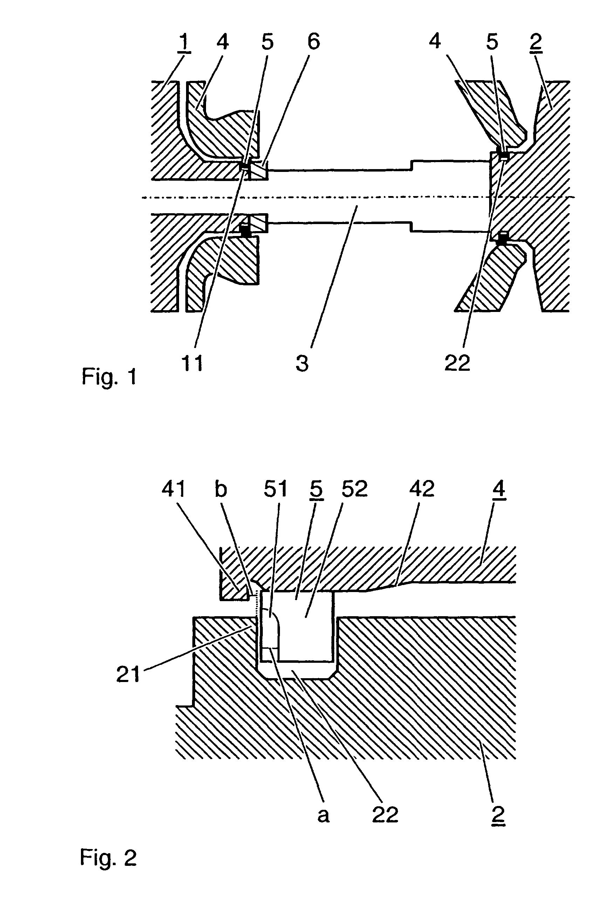

Fig. 1 zeigt schematisch eine Teilansicht eines Turboladers. Auf der linken Seite ist das Verdichterrad 1 angedeutet, welches auf der drehbar gelagerten Welle 3 befestigt ist. Die Welle wiederum ist mit dem Turbinenrad 2 auf der rechten Seite verbunden. Das Turbinenrad umfasst nicht dargestellte Schaufeln, über die das Turbinenrad von einem Abgasstrom angetrieben wird. Das Verdichterrad umfasst ebenfalls nicht dargestellte Schaufeln.

Im Bereich zwischen den beiden Rädern sind nicht dargestellte Axial- und Radiallager angeordnet. Hierfür können zwischen einem Axialanschlag am Verdichterrad und einem Axialanschlag an der Welle eine beliebige Anzahl Teile eingeklemmt sein, welche im Betriebszustand mit der Welle mitdrehen und Dicht- und/ oder Lagerfunktionen übernehmen.

Jeweils auf der Rückseite der beiden Räder sind nicht rotierende Gehäuseteile 4 angeordnet, welche gegenüber dem Lagerbereich einerseits die entstehende Wärme und andererseits den in den Strömungskanälen herrschenden Druck abschirmen. Um den hohen Druck nicht in den Lagerbereich entweichen zu lassen und damit kein Schieröl aus dem Lagerbereich des nicht rotierenden Gehäuses entweicht, sind zwischen den Gehäuseteilen 4 und den mit der Welle rotierenden Teilen entsprechende Rotationsdichtungen angeordnet.

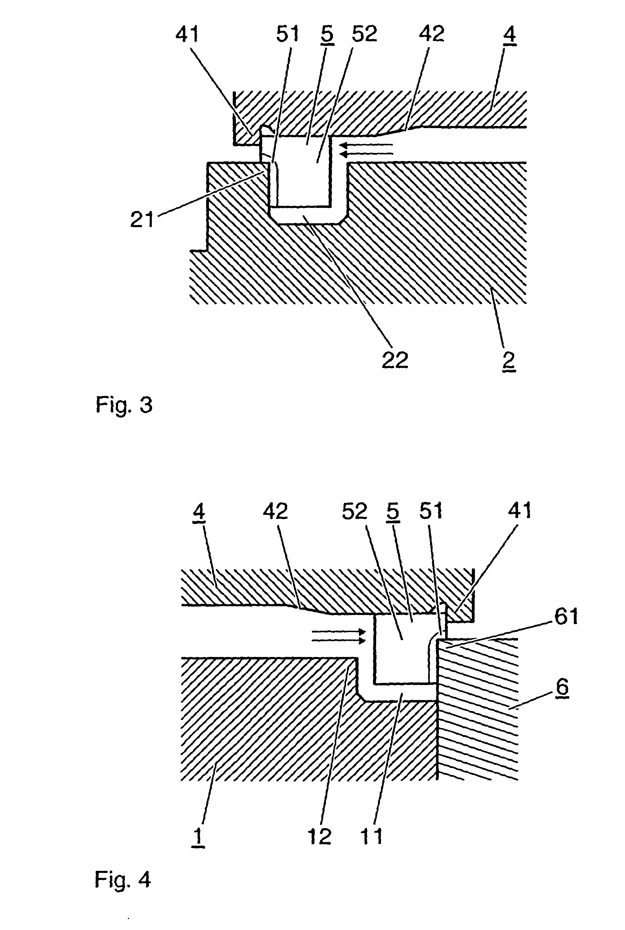

Eine turbinenseitige Dichtungsanordnung ist in den Figuren 2 und 3 schematisch dargestellt. Unten ist jeweils ein Teil des Turbinenrades 2 mit einer umlaufenden Nut 22 für den Kolbenring 5 dargestellt. Radial ausserhalb des Turbinenrades ist das Gehäuseteil 4 angeordnet. Die verdichterseitige Wand der Nut 22 dient als Kontaktoberfläche 21, welche zum Dichten mit einer entsprechenden Kontaktoberfläche des Dichtungsringes 5 zusammenwirkt.

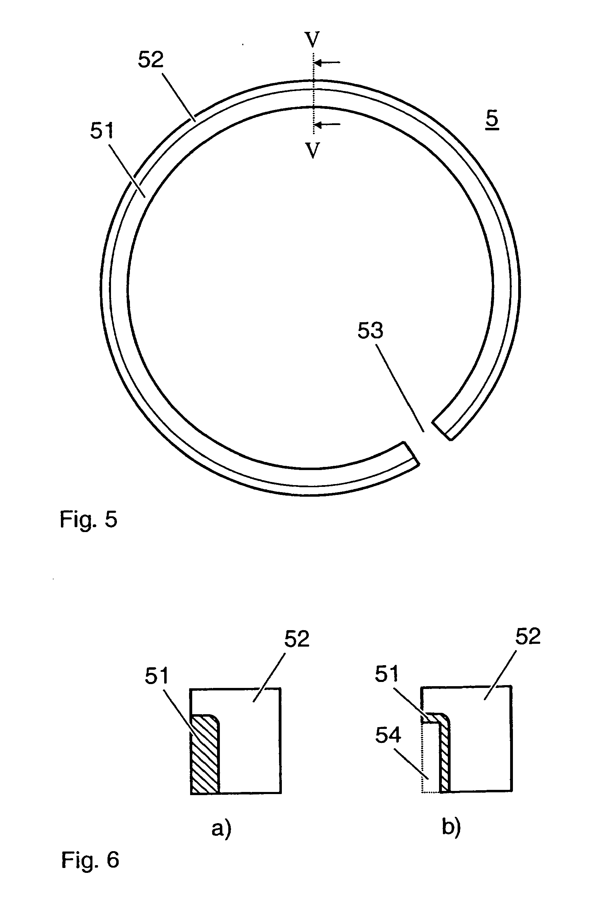

Der Kolbenring 5 wird bei der Montage in die Nut 22 eingebracht. Anschliessend wird das Turbinenrad 2 von rechts in axialer Richtung in das Gehäuseteil 4 eingeschoben. Dabei wird der Kolbenring mit radialer Vorspannung beaufschlagt, da sich das Gehäuseteil entlang dem Einschubweg an einer oder mehreren Stellen 42 oder aber kontinuierlich verengt. Dazu ist der Kolbenring, wie in Fig. 5 dargestellt, vorteilhafterweise mit einem Schlitz 53 versehen und als Sprengring ausgebildet, welcher eine entsprechende radiale Vorspannung erlaubt. Der Kolbenring wird in axialer Richtung entlang der Innenseite des Gehäuseteils 4 geschoben. Der Kolbenring ist dabei in der Nut 22 nicht eingeklemmt, er weist axial ein Spiel von bis zu mehreren zehntel Millimeter auf.

Bei der in Fig. 4 schematisch dargestellten, verdichterseitigen Dichtungsanordnung ist der Kolbenring 5 im Übergangsbereich zwischen dem mit der rotierenden Welle verbundenen Verdichterrad 1 und dem nicht rotierenden Gehäuseteil 4 angeordnet. Zwischen dem Verdichterrad und einem Axialanschlag der Welle ist ein festgeklemmtes, mitrotierendes Teil 6, beispielsweise ein Lagerteil oder eine Dichtscheibe, dargestellt.

Der Kolbenring 5 wird bei der Montage von links in axialer Richtung in das Gehäuseteil 4 eingeschoben. Dabei wird er mit radialer Vorspannung beaufschlagt, da sich das Gehäuseteil entlang dem Einschubweg an einer oder mehreren Stellen 42 oder aber kontinuierlich verengt. Dazu ist der Kolbenring vorteilhafterweise wiederum als Sprengring ausgebildet. Anschliessend wird das Verdichterrad in das Gehäuseteil 4 geschoben und an der Welle befestigt. Dabei wird der Kolbenring in axialer Richtung durch den Axialanschlag 12 entlang der Innenseite des Gehäuseteils 4 geschoben, bis er schliesslich am Ende der Montage zwischen dem Axialanschlag des Verdichterrades und der Dichtscheibe 6 angeordnet ist. Der Kolbenring ist dabei nicht eingeklemmt, er weist axial ein Spiel von bis zu mehreren zehntel Millimeter auf. Die Dichtscheibe 6 umfasst eine Kontaktoberfläche 61, welche zum Dichten mit einer entsprechenden Kontaktoberfläche des Dichtungsringes 5 zusammenwirkt.

Bei der erstmaligen Inbetriebnahme eines neu montierten Kolbenrings, kommt es während dem obengenannten Einschleifprozesses im Kontaktbereich der zueinander rotierender Kontaktoberflächen zu reibungsbedingten Materialabtragungen. Der Kolbenring 5 wird dabei während diesem einmaligen Einschleifprozess durch den in Fig. 3 mit Pfeilen angedeuteten hohen Druck gegen die rotierende Kontaktoberfläche 21 der Nut bzw. 61 der Dichtscheibe gepresst und von dieser wie von einer Schleifscheibe abgeschliffen.

Um zu verhindern, dass der Kolbenring nach Abschluss des Einschleifprozesses bei fortlaufendem Betrieb zu tief abgeschliffen oder gar durchgescheuert wird, ist am Gehäuseteil 4 ein Axialanschlag 41 vorgesehen. Der Axialanschlag begrenzt die axiale Verschiebbarkeit des Kolbenringes. Im Betriebszustand des Turboladers findet somit im Bereich der dichtend zusammenwirkenden Kontaktoberflächen im wesentlichen keine Kraftübertragung in axialer Richtung statt. Der in Pfeilrichtung gerichteten Kraft auf den Kolbenring wird vom Axialanschlag 41 entgegengewirkt.

Damit beim Einschleifen nur das weiche Material des Abstreifbereichs 51 abgetragen wird, ist die axiale Ausdehnung a der Abstreifschicht grösser gewählt als die durch den Axialanschlag 41 begrenzte maximale Verschiebung b des Kolbenrings. Somit bleibt die unerwünschte grosse Wärmebildung durch Aufeinanderreiben der harten Kontaktoberfläche 21 bzw. 61 und dem harten Material des Körpers des Kolbenrings 52 aus.

Der in den Fig. 5 und 6 detailliert dargestellte Kolbenring 5 umfasst erfindungsgemäss zwei aus unterschiedlichen Materialien hergestellte Bereiche 51 und 52. Fig. 6 a) zeigt den Kolbenring vor der erstmaligen Inbetriebnahme des Turboladers und dem damit verbundenen Einschleifprozess, während der Kolbenring nach dem Einschleifen in Fig. 6 b) dargestellt ist. Dabei ist deutlich zu sehen, dass ein Teil 54 des ersten Bereichs abgeschliffen ist.

Der Abstreifbereich 51, in welchem die mit der Kontaktoberfläche 21 der Nut bzw. 61 der Dichtscheibe zusammenwirkende Kontaktoberfläche liegt, ist aus einem weichen, leicht abtragenden Material, beispielsweise eine Nickel-Graphit-Legierung, gefertigt. Beim Material des zweiten Bereichs 52, welcher den Körper des Kolbenrings bildet, handelt es sich um ein härteres, dafür aber hochwarmfestes Material, wie beispielsweise INCONEL. Das hochwarmfeste Material weist die spezielle Eigenschaft auf, dass es auch bei hohen Temperaturen die Elastizität nicht verliert. Die für die Vorspannung verantwortliche Federkraft kann so je nach Material bei Temperaturen bis zu 600° C erhalten werden.

Bei einer axialen Breite des Kolbenrings von beispielsweise 2.5 bis 3.0 mm reicht es aus, die Abstreifschicht mit einer Stärke von 0.5 bis 0.7 mm auszubilden. Beim eingangs beschriebenen Einschleifprozess kann somit bei nur geringer Wärmeentwicklung genügend weiches Material abgetragen werden, um die erwünschte Optimierung der Spaltabdichtung zu erzielen.

Bei der Herstellung des Kolbenrings wird vorteilhafterweise zuerst der Körper 52 des Kolbenrings gefertigt, beispielsweise gedreht. Anschliessend wird die Abstreifschicht 51 als Belag aufgetragen, beispielsweise flammgespritzt. Zuvor kann eine für den Abstreifbereich vorgesehene Ausnehmung aus dem Körper des Kolbenrings entfernt werden. Vorteilhafterweise ist der Abstreifbereich 51 radial nach Aussen durch das härtere, warmfeste Material begrenzt. Dadurch kann verhindert werden, dass sich im Betrieb die weiche Abstreifschicht verformt und radial nach aussen gedrückt wird. Zudem können dadurch beim Auftragen des Belags Ablagerungen des Materials ausserhalb des vorgesehenen Bereichs besser verhindert werden.

Der erfindungsgemässe Kolbenring kann auch mit mehreren Abstreifbereichen versehen werden, beispielsweise wenn mehrere rotierende Teile abgedichtet werden sollen, oder ein rotierendes Teil mehrere, voneinander getrennte, mit dem Kolbenring zusammenwirkende Kontaktoberflächen aufweist.

Wenn die Anforderungen an den Turbolader dies zulassen, kann der erfindungsgemässe Kolbenring auch nur einseitig, beispielsweise nur turbinenseitig verwendet werden, während die andere Seite mit einem herkömmlichen Kolbenring abgedichtet wird.

### Bezugszeichenliste

- 1: Verdichterrad
- 11: Radialnut
- 12: Axialanschlag
- 2: Turbinenrad
- 21: Kontaktoberfläche, Schleifbereich
- 22: Radialnut
- 3: Welle
- 4: Gehäuseteile
- 41: Axialanschlag
- 42: Radialverengung
- 5: Kolbenring
- 51: Abstreifbereich
- 52: Warmfester Bereich
- 53: Ringspalt
- 54: Abgeschliffener Bereich
- 6: Dichtungsscheibe
- 61: Kontaktoberfläche, Schleifbereich
- a: Dicke des Abstreifbereichs
- b: Maximale Verschiebung des Kolbenrings

## Patentansprüche

1. Kolbenring zum Abdichten von mindestens zwei relativ zueinander rotierenden Bauteilen, wobei der Kolbenring eine erste Kontaktoberfläche, welche zum abdichtenden Zusammenwirken mit einer Kontaktoberfläche eines ersten der Bauteile vorgesehen ist, sowie eine zweite Kontaktoberfläche, welche zum abdichtenden Zusammenwirken mit einer Kontaktoberfläche eines zweiten der Bauteile vorgesehen ist, aufweist, der Kolbenring zum abdichtenden Zusammenwirken mit einem der Bauteile mit einer Radialspannung beaufschlagbar ist, und der Kolbenring mindestens zwei Bereiche (51, 52) aus unterschiedlichen Materialien umfasst, wobei in einem ersten der zwei Bereiche (51) die erste Kontaktoberfläche angeordnet ist, **dadurch gekennzeichnet, dass** der erste Bereich (51) aus einem weichen, leicht abtragenden Material zum optimalen Unterstützen eines gewünschten Einschleifprozesses zwischen dem Kolbenring und dem ersten Bauteil und der zweite Bereich (52) aus einem warmfesten Material zur dauerhaften Erhaltung der Radialvorspannung gefertigt ist.

2. Kolbenring nach Anspruch 1, **dadurch gekennzeichnet, dass** der Kolbenring mehrere erste Bereiche aus weichem, leicht abtragenden Material umfasst.

3. Kolbenring nach Anspruch 1 oder 2, **dadurch gekennzeichnet, dass** der mindestens eine erste Bereich (51) ringförmig ausgebildet ist, und dass der zweite Bereich (52) den ersten Bereich axial und radial jeweils zumindest einseitig umfasst.

4. Kolbenringe nach einem der Ansprüche 1 bis 3, **dadurch gekennzeichnet, dass** der mindestens eine erste Bereich (51) und der zweite Bereich (52) fest miteinander verbunden sind.

5. Rotationsdichtung, umfassend einen mit radialer Vorspannung beaufschlagten Kolbenringe (5) gemäss einem der Ansprüche 1 bis 4 sowie mindestens zwei mittels dem Kolbenring abzudichtende Bauteile (2, 4, 6), wobei die Bauteile im Bereich des Kolbenrings Kontaktoberflächen (21, 61) aufweisen, welche mit dem Kolbenring in dichtendem Kontakt stehen, und mindestens ein erstes Bauteil (2, 6) und der Kolbenring relativ zueinander rotierbar sind, wobei die Kontaktoberfläche (21, 61) des ersten Bauteils mit der ersten Kontaktoberfläche des Kobenrings dichtend zusammenwirkt.

6. Rotationsdichtung nach Anspruch 5, **dadurch gekennzeichnet, dass** die Kontaktoberfläche des zweiten Bauteils (4) mit einer entsprechenden zweiten Kontaktoberfläche des Kolbenrings dichtend zusammenwirkt, wobei der Kolbenring mit Vorspannung gegen die Kontaktoberfläche des zweiten Bauteils gepresst ist, und dass der Kolbenring entlang der Kontaktoberfläche des zweiten Bauteils unter zumindest teilweiser Abtragung des ersten Bereichs des Kolbenringes durch Reiben der ersten Kontaktoberfläche des Kolbenrings auf der Kontaktoberfläche (21, 61) des ersten Bauteils in Richtung der Kontaktoberfläche des ersten Bauteils verschiebbar ist.

7. Rotationsdichtung nach Anspruch 6, **dadurch gekennzeichnet, dass** die Verschiebbarkeit des Kolbenrings in Richtung der Kontaktoberfläche des ersten Bauteils durch einen Anschlag (41) begrenzt ist, und dass der erste Bereich des Kolbenringes (51) eine Ausdehnung (a) in Verschiebungsrichtung aufweist, welche mindestens der durch den Anschlag begrenzten maximalen Verschiebung (b) des Kolbenrings in Richtung der Kontaktoberfläche des ersten Bauteils entspricht.

8. Rotationsdichtung nach einem der Ansprüche 5 bis 7, **dadurch gekennzeichnet, dass** mehreren Bauteilen relativ zum Kolbenring drehbar angeordnet sind, und dass der Kolbenring entsprechend mehrere Bereiche aus weichem, leicht abtragendem Material umfasst.

9. Turbolader, umfassend in einem Gehäuse ein Turbinenrad (2) sowie ein über eine drehbar gelagerte Welle (3) mit dem Turbinenrad verbundenes Verdichterrad (1), **dadurch gekennzeichnet, dass** die Welle (3) gegen feststehende Gehäuseteile im Bereich des Verdichterrades und/ oder des Turbinenrades mittels einer Dichtung gemäss einem der Ansprüche 5 bis 8 abgedichtet ist.

## Claims

1. Piston ring for sealing off at least two components rotating relative to one another, the piston ring having a first contact surface, which is provided for sealing-off cooperation with a contact surface of a first of the components, and a second contact surface, which is provided for sealing-off cooperation with a contact surface of a second of the components, the piston ring being capable of being acted upon by a radial stress for sealing-off cooperation with one of the components, and the piston ring comprising at least two regions (51, 52) consisting of different materials, the first contact surface being arranged in a first of the two regions (51), **characterized in that** the first region (51) is manufactured from a soft, easily erodable material for optimally assisting a desired grinding-in process between the piston ring and the first component, and the second region (52) is manufactured from a creep-proof material for permanently maintaining the radial prestress.

2. Piston ring according to Claim 1, **characterized in that** the piston ring comprises a plurality of first regions consisting of soft, easily erodable material.

3. Piston ring according to Claim 1 or 2, **characterized in that** the at least one first region (51) is of annular design, and **in that** the second region (52) surrounds the first region axially and radially in each case, at least on one side.

4. Piston ring according to one of Claims 1 to 3, **characterized in that** the at least one first region (51) and the second region (52) are firmly connected to one another.

5. Rotational seal, comprising a piston ring (5) according to one of Claims 1 to 4 acted upon by a radial prestress, and at least two components (2, 4, 6) to be sealed off by means of the piston ring, the components having in the region of the piston ring contact surfaces (21, 61), which are in sealing contact with the piston ring, and at least one first component (2, 6) and the piston ring being rotatable relative to one another, the contact surface (21, 61) of the first component cooperating sealingly with the first contact surface of the piston ring.

6. Rotational seal according to Claim 5, **characterized in that** the contact surface of the second component (4) cooperates sealingly with a corresponding second contact surface of the piston ring, the piston ring being pressed with prestress against the contact surface of the second component, and **in that** the piston ring is displaceable along the contact surface of the second component in the direction of the contact surface of the first component, at the same time with at least partial erosion of the first region of the piston ring as a result of friction of the first contact surface of the piston ring on the contact surface (21, 61) of the first component.

7. Rotational seal according to Claim 6, **characterized in that** the displaceability of the piston ring in the direction of the contact surface of the first component is limited by a stop (41), and **in that** the first region of the piston ring (51) has an extent (a) in the displacement direction which corresponds at least to the stop-limited maximum displacement (b) of the piston ring in the direction of the contact surface of the first component.

8. Rotational seal according to one of Claims 5 to 7, **characterized in that** a plurality of components are arranged rotatably relative to the piston ring, and **in that** the piston ring comprises correspondingly a plurality of regions consisting of soft, easily erodable material.

9. Turbocharger, comprising, in a housing, a turbine wheel (2) and a compressor wheel (1) connected to the turbine wheel via a rotatably mounted shaft (3), **characterized in that** shaft (3) is sealed off relative to stationary housing parts in the region of the compressor wheel and/or of the turbine wheel by means of a seal according to one of Claims 5 to 8.

## Revendications

1. Segment de piston destiné à réaliser l'étanchéité d'au moins deux composants tournant l'un par rapport à l'autre, le segment de piston présentant une première surface de contact qui est prévue pour coopérer par scellage avec une surface de contact d'un premier des composants, ainsi qu'une deuxième surface de contact qui est prévue pour coopérer par scellage avec une surface de contact d'un deuxième des composants, le segment de piston pouvant être sollicité par une tension radiale pour coopérer par scellage avec l'un des composants et le segment de piston comprenant au moins deux régions (51, 52) en matériaux différents, la première surface de contact étant disposée dans une première (51) des deux régions, **caractérisé en ce que** la première région (51) est fabriquée en un matériau tendre facilement enlevable pour promouvoir de manière optimale un processus de meulage souhaité entre le segment de piston et le premier composant, et la deuxième région (52) est fabriquée en un matériau résistant à la chaleur pour accepter de manière durable la précontrainte radiale.

2. Segment de piston selon la revendication 1, **caractérisé en ce que** le segment de piston comprend plusieurs premières régions en matériau tendre facilement enlevable.

3. Segment de piston selon la revendication 1 ou 2, **caractérisé en ce que** l'au moins une première région (51) est réalisée avec une forme annulaire, et **en ce que** la deuxième région (52) entoure la première région axialement et radialement à chaque fois au moins d'un côté.

4. Segment de piston selon l'une quelconque des revendications 1 à 3, **caractérisé en ce que** l'au moins une première région (51) et la deuxième région (52) sont connectées fixement l'une à l'autre.

5. Joint d'étanchéité rotatif, comprenant un segment de piston (5) sollicité avec une précontrainte radiale, selon l'une quelconque des revendications 1 à 4, ainsi qu'au moins deux composants (2, 4, 6) à rendre étanche au moyen du segment de piston, les composants présentant, dans la région du segment de piston, des surfaces de contact (21, 61) qui sont en contact hermétique avec le segment de piston et au moins un premier composant (2, 6) et le segment de piston pouvant tourner l'un par rapport à l'autre, la surface de contact (21, 61) du premier composant coopérant hermétiquement avec la première surface de contact du segment de piston.

6. Joint d'étanchéité rotatif selon la revendication 5, **caractérisé en ce que** la surface de contact du deuxième composant (4) coopère hermétiquement avec une deuxième surface de contact correspondante du segment de piston, le segment de piston étant pressé avec une précontrainte contre la surface de contact du deuxième composant, et **en ce que** le segment de piston peut être déplacé le long de la surface de contact du deuxième composant avec enlèvement au moins partiel de la première région du segment de piston par frottement de la première surface de contact du segment de piston sur la surface de contact (21, 61) du premier composant dans la direction de la surface de contact du premier composant.

7. Joint d'étanchéité rotatif selon la revendication 6, **caractérisé en ce que** la mobilité du segment de piston dans la direction de la surface de contact du premier composant est limitée par une butée (41) et **en ce que** la première région du segment de piston (51) présente une extension (a) dans la direction de glissement, qui correspond au moins au glissement maximal (b) limité par la butée du segment de piston dans la direction de la surface de contact du premier composant.

8. Joint d'étanchéité rotatif selon l'une quelconque des revendications 5 à 7, **caractérisé en ce que** plusieurs composants sont disposés de manière à pouvoir tourner par rapport au segment de piston, et **en ce que** le segment de piston comprend de manière correspondante plusieurs régions en matériau tendre facilement enlevable.

9. Turbosoufflante comprenant dans un carter, une roue de turbine (2) ainsi qu'une roue de compresseur (1) connectée par le biais d'un arbre (3) monté à rotation à la roue de turbine, **caractérisée en ce que** l'arbre (3) est rendu étanche par rapport aux parties fixes du carter dans la région de la roue de compresseur et/ou de la roue de turbine au moyen d'un joint d'étanchéité selon l'une quelconque des revendications 5 à 8.
